(19) Europäisches Patentamt
European Patent Office
Office européen des brevets

(11) Publication number: **0 310 752 B1**

# (12) EUROPEAN PATENT SPECIFICATION

(45) Date of publication of patent specification: **12.04.95**

(51) Int. Cl.⁶: **C08G 69/26**, C08K 5/04

(21) Application number: **88108488.3**

(22) Date of filing: **07.02.84**

(60) Publication number of the earlier application in accordance with Art.76 EPC: **0 122 688**

The file contains technical information submitted after the application was filed and not included in this specification

## (54) Crystalline copolyamides from terephthalic acid, isophthalic acid and hexamethylenediamine.

(30) Priority: **16.02.83 US 466901**

(43) Date of publication of application:
**12.04.89 Bulletin 89/15**

(45) Publication of the grant of the patent:
**12.04.95 Bulletin 95/15**

(84) Designated Contracting States:
**AT BE CH DE FR GB IT LI LU NL SE**

(56) References cited:
**US-A- 3 145 193**
**US-A- 3 150 117**
**US-A- 3 294 758**
**US-A- 4 022 756**
**US-A- 4 113 708**
**US-A- 4 238 603**

(73) Proprietor: **AMOCO CORPORATION**
**200 East Randolph Drive**
**Chicago**
**Illinois 60601 (US)**

(72) Inventor: **Poppe, Wassily**
**105 North Main Street**
**Lombard**
**Illinois 60148 (US)**
Inventor: **Paschke, Edward Ernest**
**25 W 681 Coventy Court**
**Wheaton**
**Illinois 60187 (US)**
Inventor: **Chen, Yu-Tsai**
**22 W 401 McCarron Road**
**Glen Ellyn**
**Illinois 60137 (US)**

(74) Representative: **Ritter, Stephen David et al**
**Mathys & Squire**
**100 Grays Inn Road**
**London WC1X 8AL (GB)**

**EP 0 310 752 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Background of the Invention

### Field of the Invention

The field of this invention relates to crystalline copolyamides obtained from hexamethylenediamine (HMDA) and mixtures of terephthalic acid (TA) and isophthalic acid (IA).

### Background

Crystalline copolyamides from HMDA and mixtures of TA and IA or TA, IA and mixtures of TMHMDA and HMDA have not been obtained by the prior art where the TA content exceeds 80 percent of the acid moieties. In fact, U.S. Patent 3,382,216 teaches that the preparation of polyhexamethylene terephthalamide cannot be effected through melt condensation processes. U.S. Patent 3,150,117 discloses that linear amorphous film forming polyamides can be prepared from dicarboxylic acids and alkyl substituted saturated hydrocarbons. Trimethylhexamethylenediamine and hexamethylenediamine as such are not disclosed in this reference. Other pertinent references include U.S. Patent 3,294,758, which discloses that compositions containing greater than 30 percent hexamethylenediamine are brittle. U.S. Patents 3,825,516, 3,962,400, 3,941,755, 3,150,117, 3,627,736, 3,692,749, and 3,382,216 disclose amorphous polyamides. U. S. Patent 3,294,758 relates to amorphous polyamides, to amorphous fiber which can be crystallized after the drawn essentially amorphous fiber is heat treated at temperatures above glass transition temperatures. In reviewing all these references, it is clear that the crystalline polyphthalamides manufactured from HMDA and mixtures of TA and IA and from TA, IA and mixtures of HMDA and TMHMDA wherein the TA content exceeds 80 percent of the acid moieties, including filled compositions of these polymers having heat deflection temperatures of 240 to 305 °C, are unknown to the prior art.

The general object of this invention is to provide crystalline polyphthalamides and molding compositions reinforced with glass fibers, glass beads, minerals, graphite fibers or a mixture thereof. We have now found that crystalline polyphthalamides can be obtained from HMDA and a mixture of TA and IA.

The mole ratio of TA and IA can vary from about 81/19 to about 99/1, preferably about 85/15. This crystalline polymer, when filled and molded with glass fibers, glass beads, minerals, graphite fibers, or a mixture thereof, has a heat deflection temperature in the range of 240 to 305 °C, as determined by ASTM method, D648. This is an unusual feature and completely unexpected, since amorphous polyphthalamides have much lower heat deflection temperatures. The importance of having high heat deflection temperatures is that it enables the injected molded polyterephthalamides to be used in applications such as the hood of an automobile, shroud for a lawn mower, chain saw guard, and an electrical connector application. In addition to the high heat deflection temperature, the tensile strengths of these copolyamides are 20,000 to 40,000 psi (138-276 MPa) which is as high or higher than that of die cast aluminum or zinc, while the specific gravity is about one-half that of aluminum or zinc. Thus, these copolyamides are particularly useful for application in transportation equipment. The molecular weight of one polyamide copolymer is 5,000 to 40,000.

Our novel compositions can be filled with 10 to 60 weight percent glass fibers, glass beads, minerals, graphite fibers or a mixture thereof. Advantageously, the molding composition may contain from about 20 to 50 weight percent of glass fibers, glass beads, minerals, graphite fibers or a mixture thereof. Our studies have shown that high heat deflection temperatures of the molded copolyamide can be improved by substituting for part of the polymer, 10 to 60 weight percent thereof with glass fibers, glass beads, minerals, or graphite fibers. The polyamide copolymer costs are also reduced when glass fibers, beads, minerals or graphite fibers are substituted for part of the polyamide copolymer. These glass filled polyamides and copolyamides are much more economical than molding compositions prepared without the use of the glass fibers, glass beads, minerals, or graphite fiber fillers. Novel fibers can also be prepared from the polyamide and copolyamide derived from polyterephthalamide and this is indicated by the excellent physical properties of these polyamides.

Our novel crystalline polyphthalamides are suitably extruded at a temperature of 300 to 360 °C through a fiber die having a multiplicity of apertures of 0.06 inch (1.5mm) diameter each. Fiber strands are suitably taken up at 10 to 1200 meters per minute, preferably at 500 to 1000 meters per minute. The fibers are suitably taken up at a temperature of at least 290 °C, advantageously, in the range of 310 to 350 °C, preferably, in the temperature range of 320 to 340 °C to give fibers having a tenacity of about 6 grams per denier and an initial modulus of about 28 grams per denier. The use of polyamides as engineering plastics

has been limited only by their relatively high cost. Thus, when our invention was employed, through which the inherent cost can be reduced, the commercial application of polyamides requiring very high heat deflection temperatures can be greatly expanded.

We have prepared monofilaments using our novel polyamides. With monofilament, the process starts with a single screw extruder to supply a melt for conversion to fiber. The die for monofilament is similar to the multifilament die. The monofilament process is a slower operation, typically 50 to 200 feet/minute (15-61 m/minute). For the melt spinning operations, 40 to 80 feet/minute (12-24 m/minute) was the speed used for the monofilament processing. The monofilament, on the other hand, is water quenched with much less melt draw down. The monofilament is subsequently drawn with heated drawing systems. The monofilament drawing is done in-line using heated ovens.

Suitably, in our process for the manufacture of polyphthalamides, the reaction temperature is kept in the range of 260 to 315 °C, TA and IA in the mole ratio of 81/19 to 99/1, preferably in the mole ratio of 81/19 to 90/10, are reacted in the presence of water. In the preferred process, the reaction is conducted in a Helicone reactor, preheated to a temperature of 120 to 175 °C. In our process for the manufacture of polyamides, about equal molar amounts of HMDA are reacted with a mixture of TA and IA. The molar ratio of HMDA to the TA and IA mixture may be in the range of 1.2/1 to 1/1.2, preferably about 1/1.

Our novel injection moldable crystalline polyamide copolymers of TA and IA comprise the following recurring structural units:

A) 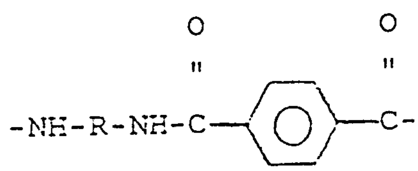

B) 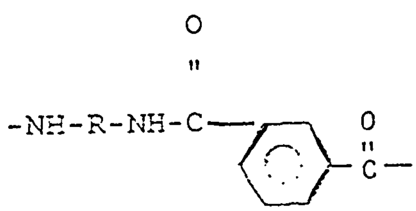

wherein R is hexamethylene. Injection molding of our polyphthalamide, filled or unfilled, is accomplished by injecting the polyamide into a mold maintained at a temperature of 100 to 220 °C. In this process, a 20 second to 1 minute cycle is used with a barrel temperature of 300 to 350 °C. These temperatures will vary depending on the glass transition temperature (Tg) and melting temperature (Tm) of the polyamide being molded. The polyphthalamide has excellent thermal and mechanical properties and can readily be molded into useful products or formed into fibers, laminates or coatings. The physical properties of the claimed polyamide and copolyamides are disclosed in Table 3.

We have found that the polyphthalamides of this invention are improved by the addition of reinforcing materials; particularly the thermal properties are improved if the polyterephthalamide contains from 10 to 60 percent by weight glass fibers, glass beads, minerals, graphite fibers or mixtures thereof. In the preferred range, the polyterephthalamides contain 20 to 50 percent by weight of the glass fibers, glass beads, minerals, graphite fiber, or mixtures thereof. Suitably, the reinforcing materials can be glass fibers, glass beads, glass spheres, or glass fabrics. The glass fibers are made of alkali-free, boron-silicate glass or alkali-containing C-glass. The thickness of the fibers is suitably on the average between 3µm and 30µm. It is possible to use both long fibers in each range of from 5 to 50mm and also short fibers with each filament length of 0.05 to 5mm. In principle, any standard commercial grade fibers, especially glass fibers, may be used. Glass beads ranging from 5µm to 50µm in diameteralso may be used as a reinforcing material.

The reinforced polyamide polymers may be prepared in various ways. For example, so-called roving endless glass fiber strands, are coated with the polyamide melt and subsequently granulated. The cut fibers or the glass beads may also be mixed with granulated polyamide and the resulting mixture melted in a conventional extruder, or alternatively the fibers may be directly introduced into the polyamide melt through a suitable inlet in the extruder. Injection molding of the novel glass filled polyamide is achieved by injecting the polyamide into a mold maintained at a temperature of 100 to 220 °C. In this process, a 30 second cycle is used with a barrel temperature of 300 to 360 °C. The injection molded conditions are given in Table 2.

TABLE 2

| | |
|---|---|
| Mold Temperature<br>Injection Pressure<br>Back Pressure<br>Cycle Time | 100 to 220 °C<br>7,000 to 16,000 psi (48 to 110 MPa) and held for 10 to 40 seconds<br>100 to 1,000 psi (689 kPa to 6.89 MPa)<br>20 to 60 seconds |
| Extruder: | |
| Nozzel Temperature | 330 to 360 °C |
| Barrels: | |
| Front heated to | 320 to 350 °C |
| Screw: | |
| | 20 to 60 revolutions/minute |

The catalyst can suitably be employed in our process. These catalysts include the following compounds: $NaH_2PO_2$, $H_3PO_2$, $H_3PO_4$, $H_2SO_4$, HCl, $Na_3PO_3$, $NaH_2PO_4 \cdot H_2O$. The amount of catalyst present can vary from about 0.01 to about 0.2 weight percent of the total weight of the reactants. The preferred catalyst is sodium hypophosphite.

The following examples illustrate the preferred embodiment of this invention. It will be understood that the examples are for illustrative purposes only and do not purport to be wholly definitive with respect to the conditions or scope of the invention.

## Examples

A. Prepolymer Preparation of 85/15 TA/IA-HMDA Composition in 10 CV Helicone Reactor (Run 10CV50)

The reaction mixture of 4517 gm TA, 797 gm IA, 5431 gm HMDA (containing 29.5 percent water as received from Monsanto), 1135 gm distilled water and 8 gm sodium hypophosphite was placed in the Atlantic Research 10CV Helicone reactor that had been preheated to between 80 and 95 °C. The reactor agitator was set at 28 rpm turning upward. Then the temperature of the reactor was properly controlled to rise by the heating system. After about 50 minutes, the heating system was set at 220 °C. Pressure was controlled to be below 120 psi 827 KPa. The agitator was changed to turning downward. Then temperature was further increased. After about 115 minutes from the beginning of the process, the melt temperature reached 260 °C. The agitator rpm was set to about 10. After about 120 minutes from the beginning, the reactor pressure was vented to atmospheric pressure in about 5 minutes. Then the prepolymer was dumped out of the reactor. The total reaction time for this batch was about 125 minutes. The prepolymer had I.V. in the range of 0.2 to 0.3 dl/g. (I.V. measured in a 60/40 solution of phenol/tetrachloroethane at 30 °C.)

B. Polymer Preparation From Prepolymer in ZSK-30 Twin-Screw Extruder/Reactor (Run Z-297)

With proper screw design and barrel arrangements, the extruder/reactor controllers were set as in the following:

| EXTRUDER/REACTOR BARREL TEMPERATURE SETTINGS, °C | | | | | | |
|---|---|---|---|---|---|---|
| Zone 1 | Zone 2 | Zone 3 | Zone 4 | Zone 5 | Zone 6 | RPM |
| 95 | 295 | 370 | 360 | 320 | 320 | 100 |

To minimize the color change, nitrogen purge was used to vent. The prepolymer was fed into extruder/reactor after the operating condition was lined up. The polymer melt temperature at Zone 6 was measured to be about 330 °C. The screw torque was 50 percent and the output rate was 3 lb/hr (1.35 Kg/hr) for this run. In some runs, the output rate reached 12 lb/hr (5.4 Kg/hr) with I.V. above 0.85 dl/g. The resin I.V. of this run was 0.90 dl/g.

Also, other screw conveyor equipment may be used to prepare the prepolymer.

C. PROPERTIES

The polymer of 0.90 I.V. was dried, ground, mixed with 45 percent glass fibers (PPG 3540), and then injection molded into test bars. The test results based on ASTM standard testing methods are shown in the following table:

PROPERTIES OF 85/15 TA/IA-HMDA COPOLYAMIDE

| ZSK-30 RUN NO. | GLASS FIBERS % | IRGANOX 1098 % | TENSILE STRENGTH ASTM METHOD D638 PSI | TENSILE ELONGATION ASTM METHOD D638 % |
|---|---|---|---|---|
| Z-297 | 45 | 0 | 37,000 | 4.1 |
| Z-297 | 45 | 1 | 37,000 | 4.3 |

| ZSK-30 RUN NO. | FLEXURAL STRENGTH ASTM METHOD D790 PSI (MPa) | FLEXURAL MODULUS ASTM METHOD D790 MM PSI (GPa) | HDT (AT 264 PSI - 1.8 MPa) ASTM METHOD D648 °C |
|---|---|---|---|
| Z-297 | 48,400 (334) | 1.91 (13.1) | >304 |
| Z-297 | 48,900 (337) | 2.03 (13.9) | >304 |

TABLE 3

| Formulation | Tg, °C | Tm, °C |
|---|---|---|
| 85/15/TA/IA-HMDA | 125 | 349 |
| Nylon 66 (For reference) | 65 | 252 |

GENERAL PROCEDURE

The salt is prepared as follows: diacid and diamine monomers are charged to a batch reactor, which has a pitched blade turbine and is of suitable temperature and pressure ratings, to provide a homogeneous salt solution. This is typically 425 to 450°F (218-232°C) and 450 to 550 psig (3-3.8 MPa). Additional components including water, catalyst, silicone oil end capping agent, and plasticizer are also introduced in the salt reactor. Water content of the salt can range up to 25% by weight. The preferred range is about 13 to 17% by weight.

The salt is metered through a pump and pressure is increased to 1500-5000 psig (10-34 MPa). The resulting prepolymer then passes through a preheat zone where temperature is raised from 425 to 450°F

(218-232 °C) to 550 to 625 °F (288-329 °C). The total residence time here is 25 to 50 seconds. The resulting prepolymer is then flashed through a control valve to give an aerosol mist at pressure of 0-400 psig (0-2.7 MPa) and the polymer is then passed through a tubular flash reactor. This reactor is designed to provide a high heat flux to the polymer and has a wall temperature of 650 to 1000 °F (343-538 °C), melt temperature range of 500 to 750 °F (260-399 °C) through the flash reactor. The total residence time in the reactor is 0.1 to 20 seconds based on feed rate and pressure. (The inherent viscosity (I.V.) is measured in 60/40 phenol tetrachloroethane at 30 °C.)

Conveniently, the polymer is injected directly on the screws of the twin-screw reactor denoted as ZSK in Example D to further increase the molecular weight. Example D was prepared as described in the General Procedure with specific details hereinbelow:

EXAMPLE D

| | |
|---|---|
| Monomers: | 85% hexamethylene diammonium terephthalate |
| | 15% hexamethylene diammonium isophthalate |
| Water Content: | 15% (by weight) |
| Specific Mass Flow: | 156 lb/hr-in$^2$ (499 Kg/hr-cm$^2$) |
| Residence Time: | Salt Reactor 90 minutes |
| | Preheat zone 36 seconds |
| | Reactor zone 1.7 seconds (est.) |
| Reactor Wall Temp.: | 700 °F (371 °C) Pressure: 100 psig (689 KPa) |
| Melt Temp.: | 580 °F to 660 °F (304-349 °C) |
| Salt Feed Temp.: | 475 °F (246 °C) |
| Procut I.V.: | (Phenol/TCE) Tube: 0.40 dl/g ZSK: 1.0 dl/g |

## Claims

1. An injection molding composition comprising a polyamide copolymer of terephthalic acid, isophthalic acid and hexamethylene diamine, said copolymer consisting of the following recurring structural units:

A) 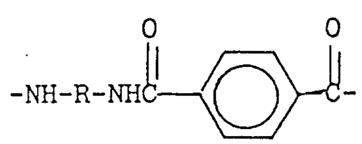

and

B) 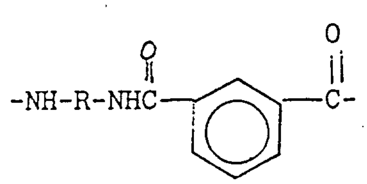

wherein the mole ratio of Units A to Units B is between 81/19 and 99/1 and R represents hexamethylene.

2. A composition according to Claim 1 comprising 20 to 50 per cent of glass fibers, glass beads, mineral fibers, graphite fibers or mixtures of these.

3. A copolymer as claimed in Claim 1 or Claim 2 in the form of a molded object.

**Patentansprüche**

1. Spritzguß-Zusammensetzung, die ein Polyamid-Copolymer von Terephthalsäure, Isophthalsäure und Hexamethylendiamin umfaßt, wobei das Copolymer aus den folgenden wiederkehrenden Struktureinheiten:

A) 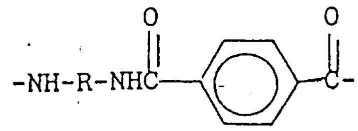

und

B) 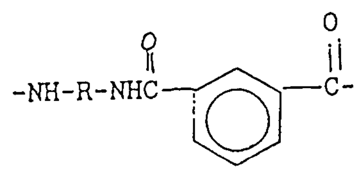

besteht, worin das Molverhältnis der Einheiten A zu den Einheiten B zwischen 81/19 und 99/1 beträgt und R Hexamethylen darstellt.

2. Zusammensetzung nach Anspruch 1, die 20 bis 50 Prozent Glasfasern, Glaskügelchen, Mineralfasern, Kohlenstoffasern oder Mischungen davon umfaßt.

3. Copolymer nach Anspruch 1 oder 2, in Form eines geformten Gegenstands.

**Revendications**

1. Une composition pour moulage par injection comprenant un copolyamide d'acide téréphtalique, d'acide isophtalique et d'hexaméthylènediamine, ledit copolymère consistant en les motifs structuraux récurrents suivants :

A) 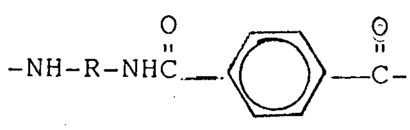

et

B) 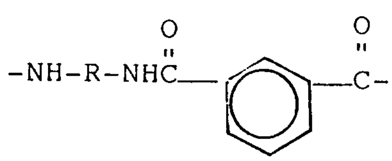

dans lesquels le rapport molaire des motifs A aux motifs B se situe entre 81/19 et 99/1 et R représente l'hexaméthylène.

2. Une composition selon la revendication 1 contenant 20 à 50 pourcent de fibres de verre, de billes de verre, de fibres minérales, de fibres de graphite ou de leurs mélanges.

3. Un copolymère selon la revendication 1 ou la revendication 2 sous la forme d'un objet moulé.